# EUROPEAN PATENT APPLICATION

(11) **EP 3 009 963 A1**
(43) Date of publication of application: **20.04.2016**
(21) Application number: 15190317.6
(22) Date of filing: 16.10.2015
(51) Int. Cl.: G06K 19/02

(54) **BRANDED ARTICLE COMPRISING A NON VISIBLE ELCTRONIC TAG FOR IDENTIFICATION**

(30) Priority: 17.10.2014 IT TO20140845
(71) Applicant: Dienpi S.r.l., 63074 San Benedetto del Tronto (IT)
(72) Inventor: MARINI, Doriana, 63074 San Benedetto del Tronto (IT)
(74) Representative: Mola, Edoardo

(57) **Abstract**

An article comprising a non-electronic branded area (2) manufactured before retail sale of the article, characterized by comprising a non-visible electronic tag (6) hidden by the branded area, the electronic tag (6) having a memory to store data so that a wireless reading device (7), when moved close to the non-electronic branded area (2), is connected in data exchange to the electronic tag (6) and visualizes the stored data.

## Description

The present invention relates to a branded article provided with a non-visible electronic identification tag. The article is, for example, an identification tag associated with a retail-sold product and removed by the user after purchase, or a garment, a wearable accessory such as a rucksack, a bag or a pair of shoes, or a package. In all cases, at least during the purchase, the article has a branded area immediately identifiable and recognisable by a customer and/or user. In addition, when the article is not the identification tag but a retail-sold product, the branded area is immediately recognised even after purchase and during use.

Technological evolution has led to the spread of portable devices having numerous data transmission functions. In addition, the fight against counterfeit products, in particular products of quality, has started to exploit the opportunities offered by these portable devices.

For example, it is known to associate identification tags with a product. However, especially in the case of optical identification via one-dimensional or two-dimensional barcodes read by a reading device, either the identification negatively impacts the appearance of the retail product or it is relatively complex for the user. In fact, when barcodes are visible, the visual balance of the product is marred by introducing imperfections, especially when the code remains on the product even after being sold. Instead, when the codes are hidden, the user can have difficulty in finding them.

The object of the present invention is to solve the above indicated problems.

The object of the present invention is achieved by means of an article according to claim 1.

The invention shall now be described with reference to the accompanying drawings, which illustrate a non-limitative embodiment in which:
- Figure 1: is a schematic view of an article according to the present invention associated with a wireless reading device; and
- Figure 2: is an enlarged and not-to-scale section of a multilayer support for an article according to the present invention.

In Figure, reference numeral 1 indicates, as a whole, an article having a branded area 2. The branded area 2 has graphical and word signs or distinguishing marks so as to be easily and above all immediately identifiable by a user/customer. This is thanks to the branded area 2 being placed at a highly visible point of a consumer product for retail sale and the customary positioning of these areas on the product. For example, the label of a bottle of wine is emphasized and easily identifiable. Instead, when the branded area 2 is on a garment, the position may be known by the customer even though the position is not of particular impact, as in the case of jeans that have the branded area on the back between the belt loops. Furthermore, the branded area 2 normally carries graphical and word signs related to advertising and information campaigns for customers/consumers who, when purchasing, look on the product for the graphical sign or distinguishing mark of the advertising campaigns.

It is possible that the graphical and word signs or distinguishing marks of the branded area 2 are applied directly to the product and in this case the branded area circumscribes these marks. For example, the distinguishing marks could be embroidered directly, hot or ink printed, glued or created with inserts such as strass, studs, etc. or in some other non-electronic manner on the product and in this way define a branded article. Alternatively, the branded area 2 can be made on a multilayer support 3, in turn fastened to the product, by sewing for example. In this case, the article 1 includes the multilayer support 3 with the branded area 2 both when sold separately and in the combination of the product with the multilayer support 3 after the latter has been fastened to the product and remains on the latter during usage by the customer after purchase.

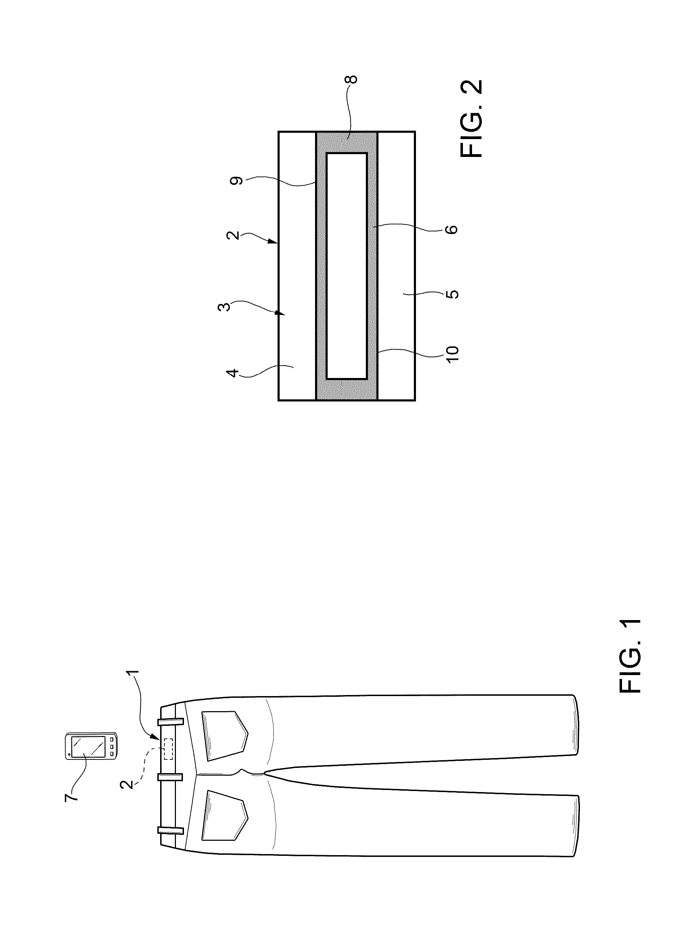

For example, with reference to the multilayer support for a pair of jeans as shown in Figure 1, the article 1 comprises a front blank 4 in leather on which the branded area 2 is made, and a rear blank 5 opposite to the front blank 4. In accordance with some embodiments, it is possible that the front 4 and rear 5 blanks are respectively the grain and flesh of a whole leather blank.

According to the present invention, the article 1 comprises an electronic tag 6 covered, and in particular hidden, by the branded area 2. The electronic tag is preferably an NFC (near field communications) tag and is programmed to store data, in particular identification data relating to the manufacturer of the product on which the branded area 2 appears and/or an identification code to ensure the genuineness of the product, or whatever. This data can be seen by a user/customer when a reading device 7, for example an intelligent personal mobile device, such as a smartphone or a tablet, is brought close to or in contact with branded area 2. The electronic tag 6 is not visible to the user/customer and is covered by the branded area 2 so as not to negatively affect the appearance of the product. However, the position of the electronic tag 6 in the branded area 2 makes identification of the area of the product where the reading device 7 should be placed close to, for automatically displaying the stored data, both simple and intuitive. It is possible to hide an electronic tag via the branded area in numerous product sectors where the communication of distinguishing marks is left to visible areas of the sold product. For example, sectors of interest include those of clothing, personal accessories, sports equipment and the bottled distribution of wines, beers, spirits and similar. The use of a flexible electronic tag is preferable for better adaptation to different shapes. For the purpose of rendering the manufacture of counterfeit products more difficult, the electronic tag 6 is 'one-time-programmable' so that the manufacturer of the product has control of the stored data. Furthermore, to reduce the costs and reduce the size as much as possible, the electronic tag 6 is passive, i.e. it does not comprise onboard electric power sources.

It is important that the data is also available to the user/customer after purchase and for this purpose it is useful in the clothing sector that the electronic tag is preserved during domestic washing and ironing.

To this end, the electronic tag 6 is surrounded by a protective barrier 8. The protective barrier 8 is both water and temperature resistant. In particular, the protective barrier 8 comprises a first film 9 arranged between the electronic tag 6 and the front blank 4 and a second film 10 arranged between the electronic tag 6 and the rear blank 5. The first and second films are continuous to define an efficient water barrier and are flexible to follow the deformations of the product during use and/or washing. The films 9 and 10 completely surround the electronic tag 6 so that lateral contact between water and the electronic tag 6 is also blocked, as shown in Figure 2.

The thermal stress induced during ironing is considered a peak stress, i.e. applied for a few seconds, and therefore, following experimental testing, it has been verified that the films 9 and 10 made with materials resistant to temperatures up to 60°, preferably up to 90°, and tags operable at up to 85° are adequate.

Furthermore, the material of the blanks 4 and 5 can also contribute to making the protective barrier 8 more effective.

For example, when the blanks are in natural leather, it is sufficient to make the protective barrier 8 using mastic or a paste resin, for example by opportunely spreading layers of a polychloroprene-based adhesive paste resistant up to a temperature of 90°. The material of the rear blank 5 could be different, and in particular less precious, than that of the front blank 4. For example, when the front blank 4 is in synthetic leather, the rear blank 5 could be di a natural or synthetic fibre fabric. In this last case, it is possible to use a fabric of polyester-based fibre.

According to a further embodiment of the present invention, the front blank 4 could be either a synthetic or natural fabric. In this case, the films 9 and 10 are applied starting from a sheet, such as sheets of hot-melt polyurethane - a thermoplastic commercialized with the code HMPU class B for example, on both the front blank 4 and the rear blank 5, via hot presses. Then, the electronic tag 6 is interposed between the blanks 4 and 5 and a hot pressing process performed so that the originally sheet-like material softens or melts to define the protective barrier 8 and incorporates the electronic tag 6.

Both embodiments were successfully tested in numerous 30° washes with neutral soap.

It is possible to make the multilayer support 3 in multilayers comprising a plurality of branded areas 2 and associated electronic tags 6. By means of a punching operation, a plurality of identification articles is created with a single electronic tag 6. Thus, on a peripheral edge of each identification article the thicknesses of the front blank 4, the rear blank 5 and the protective barrier 8 can be identified with the naked eye. The electronic tag 6 is incorporated in the protective barrier 8 and is not visible.

According to the present invention, the electronic tag 6 could be part of a programmed Web platform, for example via a web app, to perform the following functions:
- suggest up-to-date matching, always from the same collection of a brand, via a link to a web site that is periodically updated, for example every day;
- interact with printers equipped with NFC - RFID technologies, including 3-D printers, in such a way that by laying the article 1 on or moving it close by, the printer is given the command, via the electronic tag 6, to print a certain file (whether text, picture, etc.). For example, it is possible to print the instruction manual of a domestic appliance - and various instructions for assembling furniture and explanatory drawings - photo albums, etc.). in the case of 3-D printers, the electronic tag 6 could be programmed to reproduce the object carrying the tag, or any other three-dimensional object, in 3-D.
- interact with projection equipment, and smartphones equipped with an image projector in such a way that by moving the tag close to them, a command is automatically triggered to screen films, images and/or texts, via light beams with which the projector or phone is equipped (for example, in the middle of a product advertisement, by moving the tag of product close by, the content that can be accessed via the tag is shown. This content could, for example, be loaded on a web site, the address of which is stored in the electronic tag 6);
- interact with 3-D scanners: by moving the tag of the article close to the scanner, the scanning of the article and/or product is triggered and, in the case of a garment, the right size to purchase is automatically indicated, saving time wasted in changing cubicles, in turn equipped with a 3-D body scanner 3D;
- support the operation of anti-counterfeiting software: as soon as the reading device, a smartphone or whatever, is placed on and/or moved close to the electronic tag 6, the wording true or false automatically appears on the display, as the web app detects the serial number of the electronic tag 6 and associates it with the reference brand to which a pairing was previously made. This functionality has two alternative uses through different personal password categories, the categories being associated, for example, with the manufacturer of the article or with the end consumer of the article. Operation is based on an IP address, with reference to which the contents are stored and accessible in different modes according to the password categories, and also via an email address;
- track the articles: the electronic tag 6 provides valid support to conscious and responsible consumption, aids cultural evolution of the user/customer by promoting more personalized purchases and consumption. The electronic tag 6 enables certifying the entire production chain in a transparent manner. The articles are also tracked by an unambiguous code and therefore, in the event of theft, it is possible to report them to prevent them being put back on the market;
- support management software for showrooms and exhibition stands: by means of the electronic tags 6, it is possible to fill in order sample/preference lists via smartphone or other reading devices. These preference lists can be sent to oneself, the manufacturer and the agent, and can be directly transformed into orders.

The electronic tag 6 enables consumers to check stock availability and to order an article that they have visualized in a shop via smartphone or tablet. This is extremely useful in shops in large cities, large shopping centres with leading brands, airports, etc.: an article can be ordered when there is no time to buy at that moment or when it is not wished to carry parcels.
- support an "augmented reality" application, in such a way that, through associating the logo reproduced on the branded area 2 with a 3-D animation or any other type of file and by framing the tag with the smartphone or other personal mobile device, the screening of file on its monitor is initiated. The same file can be automatically sent, via NFC, for printing or a command automatically sent to the projector to start the screening of the file.

Finally, it is clear that modification or variants can be made with respect to the article 1 described and illustrated herein without departing from the scope defined in the appended claims.

It is possible that the electronic tag 6 and, optionally, also the protective barrier 8 are applied in a branded area 2 directly embroidered on the product, as can happen, for example, with a rucksack. In this case, the article comprises the product.

## Claims

1. An article comprising a non-electronic branded area (2) manufactured before retail sale of the article, **characterized by** comprising a non-visible flexible electronic tag (6) hidden by the branded area (2), the electronic tag (6) comprising a memory to store data so that a wireless reading device (7), when moved close to the non-electronic branded area (2), is connected in data exchange to the electronic tag (6) and visualizes the stored data.

2. The article according to claim 1, **characterized by** comprising a protective barrier (8) resistant to water during washing in a washing machine and to temperature during ironing, and defining a zone where said electronic tag (6) is located, the protective barrier (8) comprising a first water resistant film (9) located on the opposite side of the non-electronic branded area (2) with respect to the electronic tag (6) .

3. The article according to claim 2, **characterized in that** the protective barrier (8) comprises a second water resistant film (10) located on the opposite side to the first film (9) with respect to said electronic tag (6).

4. The article according to either one of claim 2 or 3, **characterized in that** at least one of the first and second films (9, 10) is an adhesive film and **in that** the electronic tag (6) is embedded in the protective barrier (8).

5. The article according to claim 4, **characterized in that** the non-electronic branded area (2) is manufactured on a flexible material comprising at least one of cellulose, a thermoplastic or thermosetting material, synthetic or natural leather, or fabric in natural or synthetic fibre.

6. The article according to claim 5, **characterized in that** at least one of said first and second films (9, 10) comprises either a sheet material associated with a non-electronic branded area (2) applied on a natural or synthetic fibre fabric or a layer of a pasty material associated with a non-electronic branded area (2) applied on natural or synthetic leather.

7. The article according to claim 6, **characterized in that** the protective barrier (8) is interposed between a first blank (4) where the non-electronic branded area (2) is present and a second blank (5) connected to the first blank (4) by the protective barrier (8).

8. The article according to claim 7, **characterized in that**, when the flexible material is natural or synthetic leather, the film comprises a layer of a polychloroprene-based material.

9. The article according to claim 7, **characterized in that**, when the flexible material is a natural or synthetic fabric, the sheet material is polyurethane-based.

10. The article according to any of the preceding claims, **characterized in that** the electronic tag (6) is one-time programmable.
